(19) Europäisches Patentamt
European Patent Office
Office européen des brevets

(11) **EP 2 087 978 A2**

(12) **EUROPEAN PATENT APPLICATION**

(43) Date of publication:
**12.08.2009 Bulletin 2009/33**

(51) Int Cl.:
***B28C 5/40*** (2006.01)

(21) Application number: **09445005.3**

(22) Date of filing: **10.02.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **11.02.2008 SE 0800296**

(71) Applicant: **Hasselqvist, Stig**
**582 43 Linköping (SE)**

(72) Inventor: **Hasselqvist, Stig**
**582 43 Linköping (SE)**

(74) Representative: **Berglund, Erik Wilhelm et al**
**Berglunds Patentbyrå AB**
**Aspebråten**
**590 55 Sturefors (SE)**

(54) **Method for introducing fibres in fresh concrete**

(57) A method and a device for introducing longer steel fibres in concrete using a device mounted on or close to a concrete nozzle, where the fibres are cut and shot into the concrete flow through a pipe, or dumped with pumped concrete:. The method is useful introducing fibres directly in a concrete mixer, too. The embodiment opens up new possibilities to robotise the construction process and to replace conventional reinforcement.

**Fig. 5**

EP 2 087 978 A2

## Description

## Background

Steel fibres have long been used as reinforcement in concrete. Different methods to blend the fibres with concrete has been used, but usually the fibres have been introduced and blended with the fresh concrete in a mixer. With earlier methods constraining problems have arisen because of balling of the fibres and the fresh concrete, especially with to many or to long fibres.

The most common dimensions of short fibres have been diameters 0.3 to 1.2 mm and with lengths between 25 to 60 mm. A ratio between length and diameter l/d (aspect ratio) has been in common use between 50 and 100.

Cracking in loaded fibre concrete arises as microcracks and with higher loads the fibres are pulled out and a pullout work constitutes a ductile behaviour of the composite, much more than with an unreinforced but also with conventionally, macro reinforced concrete. However, the steel strength of the fibres cannot be fully utilised with earlier methods because of constraints of aspect ratio.

In order to make the fibres more efficient as reinforcement in concrete they have been deformed in different ways. Typically hooked ends, waves and deformed surfaces have been used to increase the binding effects between fibre and matrix. Still dimensional constraints have prevailed.

A company dominating on the market delivering steel fibres, has a number of patents concerning different methods introducing fibres e.g. gluing fibres with water soluble glue in bundles of 10 to 15.

US 6,945,686 is another example of measures to introduce as long fibres as possible into a concrete mixer. Even so the constraints of aspect ratio between 60 to 120 are predominant..

Utilising the cord in car tires is another application where fibres are used with aspect ratios up to 250, as in US 7,267,873. Welding the ends on twisted wires to bundles with about 20 fibres in each, the introducing during mixing becomes facilitated. However the fibres are only partly embedded in the matrix, why the reinforcement efficiency is limited.

There are two different methods using shotcrete, wet and dry. Mostly the methods have used premixed fibres. Almost all applications in concrete mixing are using as long and sometimes as many fibres as possible without balling, using shotcrete or ordinary concrete casting. Except from balling other difficulties arise in shotcrete, for instance wear in hoses and pumps and the handling of the fibres can require a lot of work.

## Brief description of the invention

This invention is a method of how to introduce longer fibres on right places and in sufficient volumes.

It will be possible to utilise the fibres stress capacity to a critical level, just before the fibres failure. Before this has been almost impossible in practical applications, because, as already indicated, fibres with aspect ratios in excess of 150 to 200 are incompatible with uniform fibre distribution and adequate workability of the concrete mix.

Further on, according to a fresh report, the stress in a fibre is

$$\sigma_{pc} = \Lambda \tau \, V_f \, \, l/d \, (\text{MPa})$$

Where $\Lambda$ = an efficiency factor depending on length, orientation, amount pulled out fibres per area unit, statistical distribution and physical shape, $\tau$ = interfacial shear resistance, $V_f$ = volume fraction of fibres, 1 = fibre length and d = fibre diameter.

According to the above it is evident that

- with long fibres
- with high volume fractions where stress is high the loading capacity of the concrete can be improved substantially using the embodiment. Hence it is possible to conclude that if the stress in the fibres is close to fracture, the bearing capacity of the concrete is improved. It is then possible to adapt the amount of the reinforcement where it is needed and thus generally improve the concrete technology.

The quality of the composite is changeable by blending shorter and longer fibres, thus arrange more ductility and strength to it. The composite becomes custom-made, which here indicates increased possibilities and advantages to robotise the process. It is possible to avoid use of macro reinforcement, bars and nets, and is of excellent signification as to economy and methods.

It has been calculated that the same flexural stress in a loaded unit needs less steel with longer fibres than with macro reinforcement. Another advantage with longer fibres is that shrinkage decreases and larger areas without joints are possible.

## Detailed description of the preferred embodiments

Using shotcrete the wire is advantageously retained in cylindrical tubes and reeled to a chopping device, which concurrently feeds, marks with indentations and cuts the wires to fibres. The fibres are then transported through a pipe and introduced into a concrete flow where fibres and concrete are mixed in the air.

In a second embodiment used when pumping concrete with higher mass flow than with shotcrete, more fibres are required per time unit. Wires are glued as planar bands with up to 150 - 200 wires, as when processing staples. The bands are rolled on spools with up to more than 500 kilograms. The spools are driven by a motor when unrolled. The band is fed and separated to individual wires by a pair of rolls, pulling and indenting the wires.

The wires are fed to a supporting surface where in a preferred embodiment a tool with edges rotates with a speed slightly higher than the wires. By bevelled or displaced edges the wires are cut and torn successively to fibres and the fibres become shot towards an opening. The opening usually consists of a hopper leading to a pipe which introduces the fibres into a concrete flow, which usually is a pump flow or through a chute gliding concrete. The pipe ends in a nozzle which is elongated, and thus bypassing the concrete nozzle. Fibres and concrete are blended in the air.

The quantity of the fibres is possible to control where more and less fibres are to be introduced in the concrete. The holding-on tool where the wire band with separated wires is cut, should be adjustable in order to get optimal cutting. As holding-on tool a roller is an alternative, adjustable against the rotating edges.

The fibre band is arranged as with staple bands, but can be glued on a tape in order to get a stronger joining. As mentioned before it is possible to control the process with a robot with preprogrammed control of the fibre volumes. With longer fibres controlled as to the concrete volume it is possible to get economical and technical outcomes not seen before. This could be practised with load bearing concrete too, and thus the costly and troublesome reinforcing handwork with nets and bars could be avoided more or less completely.

By arranging cutting edges on the same wheel but with different peripheral distances it is possible to cut different lengths in the same process, where the shorter fibres increase the ductility and the longer ones the tensile strength. Longer and stronger fibres increase the strength of the composite or require less fibre volumes. By using high power laser technology it is possible to cut the fibre bands in higher volumes and with no wear on the tools.

The fibres are introduced in the concrete flow just before it is thrown to the base, pumped, shot or just fallen by gravitation. In order to further control the fibre speed in the concrete flow, a use of an air flow or electromagnets to accelerate the fibres can be arranged. It is appropriate, too, to use induction or optical sensors to supervise the right flow according to demands. Control of the distribution of the fibres can be achieved with nozzles and guiding surfaces.

**Description of the drawings**

Fig. 1 is an assembly of a shotcrete arrangement.
Fig. 2 is an assembly of a concrete pumping arrangement.
Fig. 3 is device with combined cutting and feeding wheels in a side projection.
Fig. 4 is the same device as in Fig. 3 in a longitudinal projection.
Fig. 5 is an assembly of a combined feeding, separating and cutting device.
Fig. 6 is a separating and feeding device with separated wires in a longitudinal direction of the wires.
Fig. 7 is a spool with one flange removed and with wire bands and a feeding device.
Fig. 8 is an embodiment with pumping device in a side projection.
Fig. 9 is a device intended for cutting fibre bands with laser equipment.

**Detailed description of the drawings**

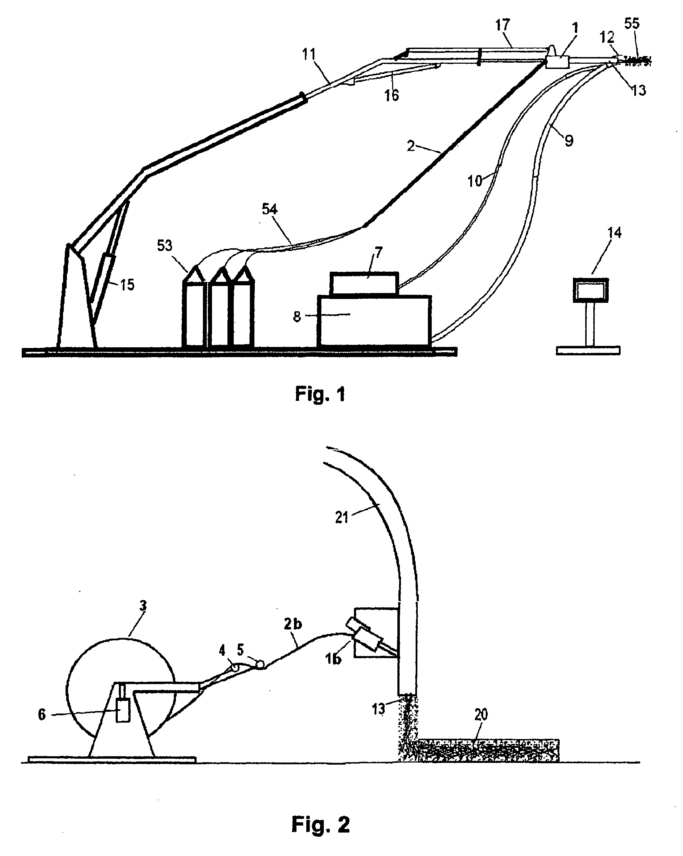

**Fig. 1** is an assembly with a robotised or manually controlled shotcrete device. A concrete pump 8 pumps concrete in the hose 9 to a nozzle 12. The air compressor 7 blows pressurised air through the tube 10 up to the nozzle 12 where the concrete has been transported, and by the pressurised air sprayed through the nozzle 12 against a base intended to be covered by concrete. A preferred embodiment feeds, indents and cuts the fibres and transmits to the concrete nozzle the cut fibres in a fibre pipe 13, resulting in the fibres and the concrete being mixed in the air and brought to a bedding.. The wires 54 from which fibres will become cut, are wrapped in cylinders 53 and are reeled and conducted to the cutting unit 1. The numbers 15, 16 and 17 are hydraulic cylinders controlling the robot extension 11.

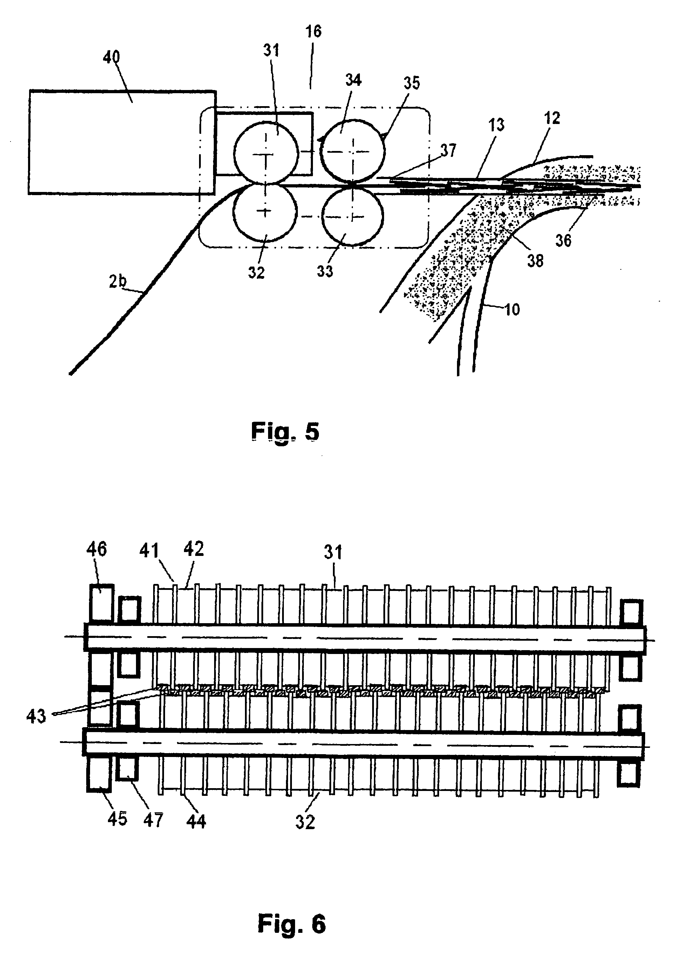

In a similar embodiment a fibre band 2b with glued wires is fed and separated, indented and cut by a device 16 (Fig. 5).

**Fig. 2** is an assembly with a band roll 3 driven by a motor 6 and the cutting device 1b which discharges in the fibre pipe 13, connected to the concrete flow via the conduit 21. The fibre pipe 13 is extended from the conduit 21 and the fibres are mixed in the air with the pumped concrete on its way to the mould 20.

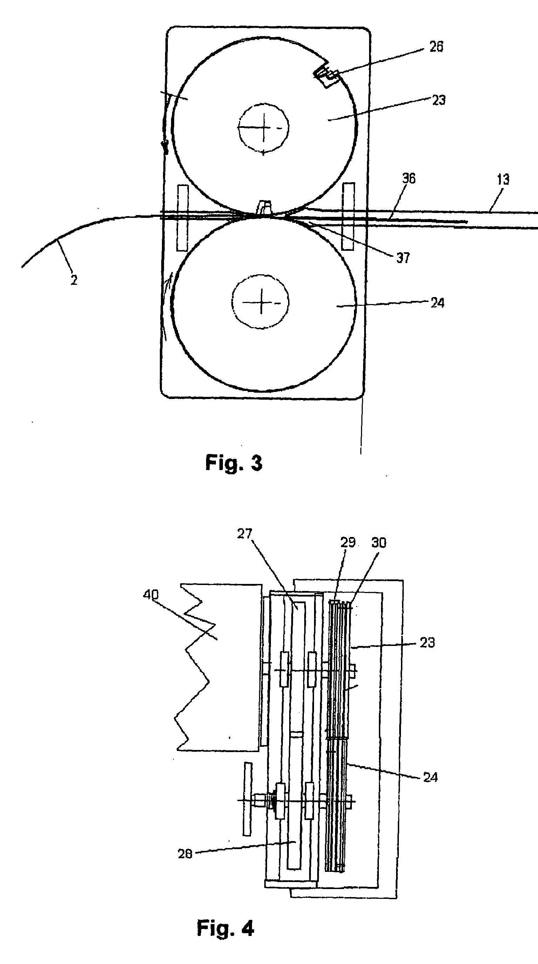

**Fig. 3** is side projection of a cutting device used during reeling wires 2, which pulls, indents and cuts them with the same pair of rollers, 23 and 24. In a preferred embodiment, removable edges 26 are used. The pair of rollers indent the wire in order to get improved interfacial bond and a safer feeding. The cut fibres 36 are cought by a hopper 37 on the pipe 13.

**Fig. 4** is the same device as in Fig. 3, projected longitudinally. The pair of rollers 23/24 has several grooves used for wire conduit and with cutting edges 29 and 30 displaced and each cutting a decided amount of wires. The pair of rollers 23/24 are driven by gear wheels 27 and 28. The number 40 is a drive motor.

**Fig. 5** is an embodiment used when cutting wire bands with wires up to 50 to 150 pcs, which are pulled by the motor 40 and the pair of rolls 31 and 32. where the wires are separated and fed to the cutting tool 34. The cutting tool consists of a wheel with knives 35 on the roller 34 which cut and tear the wires 2b and throws the fibres 36 to a hopper 37 and a short pipe 13 leading to the flow where the fibres and the concrete are mixed in the air. The knife 35 has a speed slightly higher than that of the wires, thus tearing and pushing the fibres to the hopper 37. The air hose 10 conducts pressurised air away to the concrete nozzle 12 surrounding the pipe 13 and pushes concrete and fibres to a bedding. The tube or nozzle for the fibres extend a short distance out through and past the opening of the concrete nozzle. It has turned out to improve an even blending of fibres into the concrete, perhaps because there is no longer any friction from the concrete tube influencing the flow of the concrete.

**Fig. 6** is a separating device where the glued fibre band 2b is separated to single wires 43 by passing between the rollers 31 and 32, with displaced flanges so as one flange 42 in the upper roller 31 presses a wire 43 out of position of the band at the same time as one flange 44 in the lower roller presses corresponding wire out of position of the band.

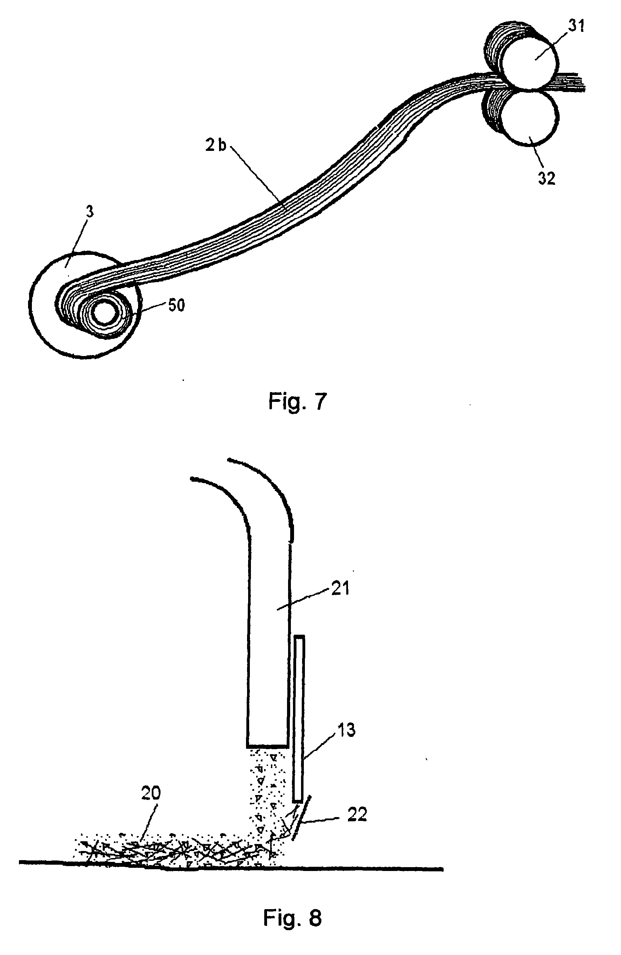

**Fig. 7** is a band roller 3 with the closest flange removed and with the band 50 rolled on, and further on the band 2b pulled by the rollers 31 and 32 which also separate the band as described in Fig. 6 above.

**Fig. 8** is another embodiment of pumping concrete with the fibre pipe 13 sideways of the concrete conduit 21 and with a diffusor 22, distributing the fibres into the concrete flow or over a surface with fresh concrete. The fibre pipe could also be placed concentrically in the concrete flow.

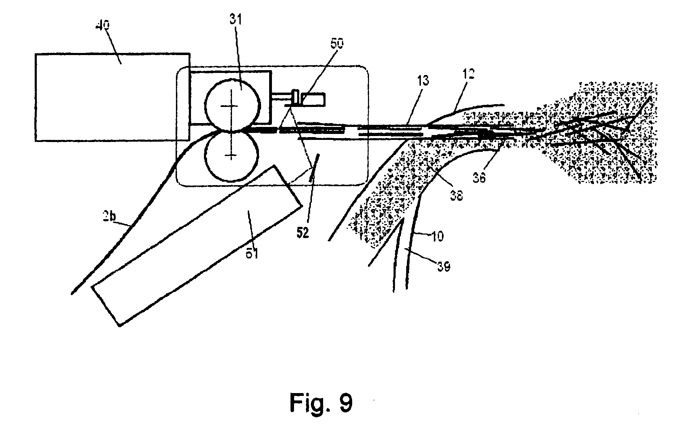

**Fig. 9** is an arrangement with laser cutting. The laser beam 44 is led with mirrors 50 and 52 and cuts the wires or the wire band to fibres. Also here the fibre nozzle extend out through the concrete nozzle in order to improve a smote adding of fibres to the concrete. The fibre nozzle may be placed slightly inside or outside of the concrete nozzle or a bit longer out of the concrete nozzle. As in fig. 5 the very short and straight transport from the cutting to the mixing with the concrete provide an even and controlled mixing with a reduced risk of balling of the fibres. This also allow use of a wider range of fibre lengths.

The foregoing preferred embodiments and examples are intended for illustration only and therefore not intended to limit the scope of the invention.

**Claims**

1. A method of introducing metal fibres in fresh concrete, pumped, sprayed or poured, by one or many wires which are supplied to a chopping device mounted on or close to a concrete nozzle, the device chopping the wires to fibres no longer than 200 mm, which are introduced in the concrete flow through a nozzle, fitted longitudinally in and through the concrete nozzle or adjacent to it, thus mixing fibres and concrete in the air on its way to the base, alternatively added to the concrete flow leaving a chute.

2. A method as claimed in Claim 1 introducing the fibres via a fibre nozzle concentrically fitted in and through a concrete nozzle, or adjacent to it, the fibres are surrounded by concrete on their way to the base concrete and mixed with the concrete alternatively added to the concrete flow leaving a chute.

3. A method as claimed in Claim 2 reeling wires from reels leading to a device which feeds and chops the wires to short fibres.

4. A method as claimed in Claim 2 using wires arranged as bands and leading them to a device which feeds and chops the wires to short fibres.

5. A method as claimed in Claim 4 with wire band rolled on cylindrical rolls.

6. A method as claimed in Claim 4 with the wire bands fed to a device with separating roll feed separating the wire band to individual wires and chopping means.

7. A method as claimed in Claim 6 with the roll feed utilised with flanges arranged so as to separate the wires by pressing alternately down respectively up every single wire and thus separating them.

8. A method as claimed in Claim 7 chopping the wires by a laser device.

9. A method as claimed in Claim 3 reeling wires from cylindrical containers and leading them to a device which feeds and chops the wires to short fibres.

10. A method as claimed in Claim 3 and 4 with the wires fed by roll feed with deformed surfaces.

11. A method as claimed in Claim 5 with the wire bands separated by a grid where the separating means are adapted to the diameters of each wire.

12. A method as claimed in Claim 11 with the wire bands separated by a grid consisting of knife blades situated on a distance corresponding to each wire diameter and the knives extend between the wires and thus separate them.

13. A device for use in a method as claimed in Claim 3 **characterized in** chopping wires with the wires fed by a roller feed and a cutting means, mounted on or close to a concrete nozzle to facilitate the fibres to mix with the concrete between the nozzle and the base concrete.

14. A device as claimed in Claim 13 **characterized in** reeling wires from reels leading to a device which in the same pair of wheels feeds, hobs and chops the wires to short fibres..

**15.** A device as claimed in Claim 13 **characterized in** chopping wires with wire bands fed by a roller feed which simultaneously separates the wires and a cutting means mounted on or close to a concrete nozzle with the wire nozzle extended beyond the concrete nozzle to facilitate the fibres to mix with the concrete between the nozzles and the base concrete.

**Fig. 1**

**Fig. 2**

**Fig. 3**

**Fig. 4**

**Fig. 5**

**Fig. 6**

31

2 b

3

50

32

## Fig. 7

21

13

20

22

## Fig. 8

Fig. 9

**EP 2 087 978 A2**

## REFERENCES CITED IN THE DESCRIPTION

### Patent documents cited in the description

- US 6945686 B
- US 7267873 B